# EUROPÄISCHE PATENTANMELDUNG

(11) **EP 1 398 134 A2**
(43) Veröffentlichungstag der Anmeldung: **17.03.2004**
(21) Anmeldenummer: 03016288.7
(22) Anmeldetag: 18.07.2003
(51) Int. Cl.: B29C 51/20, B29C 51/32

(54) **Thermoformwerkzeug**

(30) Priorität: 11.09.2002 DE 20214006 U
(71) Anmelder: Marbach Werkzeugbau GmbH, 74080 Heilbronn (DE)
(72) Erfinder: Frank, Matthias, 74226 Nordheim (DE); Masche, Hans, 75031 Eppingen (DE)
(74) Vertreter: Dreiss, Fuhlendorf, Steimle & Becker

(57) **Zusammenfassung**

Die Erfindung betrifft ein Thermoformwerkzeug (10), mit einem Formwerkzeug (12), in dem mindestens eine Formöffnung (54) vorhanden ist, mit Mitteln (28), mit denen ein plastisch verformbares Flächenmaterial an der Innenwand der Formöffnung (54) in Anlage gebracht werden kann, mit einem ersten Trennwerkzeug (22), welches mit einem ersten Tragelement (16) verbunden ist und mindestens eine um den Rand der Formöffnung (54) umlaufende erste Trennkante (36) aufweist, und mit einem zweiten Trennwerkzeug (44), welches mit einem zweiten Tragelement (38) verbunden ist und mindestens eine zweite Trennkante (56) aufweist, die mit der ersten Trennkante (36) am ersten Trennwerkzeug (22) zusammenwirkt, wobei mindestens ein Trennwerkzeug (22, 44) aus einem anderen Material hergestellt ist als sein zugehöriges Tragelement (16, 38). Es wird vorgeschlagen, dass das erste Trennwerkzeug (22) gegenüber dem ersten Tragelement (16) nicht starr gelagert bzw. befestigt ist und/oder das zweite Trennwerkzeug (44) gegenüber dem zweiten Tragelement (38) nicht starr gelagert bzw. befestigt ist.

## Beschreibung

### Stand der Technik

Die Neuerung betrifft ein Thermoformwerkzeug, mit einem Formwerkzeug, in dem mindestens eine Formöffnung vorhanden ist, mit Mitteln, mit denen ein plastisch verformbares Flächenmaterial an der Innenwand der Formöffnung in Anlage gebracht werden kann, mit einem ersten Trennwerkzeug, welches mit dem ersten Tragelement verbunden ist und mindestens eine um den Rand der Formöffnung umlaufende erste Trennkante aufweist, und mit einem zweiten Trennwerkzeug, welches mit einem zweiten Tragelement verbunden ist und mindestens eine zweite Trennkante aufweist, die mit der ersten Trennkante am ersten Trennwerkzeug zusammenwirkt, wobei mindestens ein Trennwerkzeug aus einem anderen Material hergestellt ist als sein zugehöriges Tragelement.

Ein Thermowerkzeug der eingangs genannten Art ist vom Markt her bekannt. Mit ihm können aus einer thermoplastisch verformbaren Folie becher- oder deckelförmige Endprodukte hergestellt werden. Hierzu wird die Folie zunächst mit einem stempelartigen Vorstreckwerkzeug in die Formöffnung im Formwerkzeug hineingedrückt, und anschließend wird die Folie mit Druckluft gegen die Innenwand der Formöffnung in Anlage gebracht und schließlich abgekühlt.

Um den ausgeformten und abgekühlten Becher bzw. Deckel von der Restfolie trennen zu können, ist eine Schneid- bzw. Stanzvorrichtung vorhanden. Diese umfasst eine um den Rand der Formöffnung umlaufende Schneidkante, die an einer Schnittstempelplatte ausgebildet ist. Auf der anderen Seite der Folie, der Schnittstempelplatte gegenüber liegend, ist eine Schnittplatte vorhanden, in der zu den Schneidkanten der Schnittstempelplatte komplementäre Ausnehmungen vorhanden sind, die durch Schnittkanten begrenzt werden. Wenn die Schnittplatte in Richtung auf die Schnittstempelplatte bewegt wird, wirken die entsprechenden Schnittkanten zusammen und trennen den fertigen Becher von der Restfolie.

Bei dem bekannten Thermowerkzeug sind die Tragelemente, an denen die Schnittplatte bzw. die Schnittstempelplatte befestigt sind, aus Leichtmetall, beispielsweise Aluminium hergestellt. Die Schnittplatte und die Schnittstempelplatte sind jeweils aus Stahl gefertigt.

Dadurch, dass für das Trennwerkzeug und das entsprechende Tragelement unterschiedliche Materialien verwendet werden, kann für jede Funktion der optimale Werkstoff ausgewählt werden. So wird für das Trennwerkzeug aus Stabilitäts- und Verschleißgründen ein vergleichsweise fester und verschleißresistenter Werkstoff verwendet. Andererseits kann durch die Verwendung eines Leichtmetalls für das Tragelement das Gesamtgewicht der aus Trennwerkzeug und Tragelement gebildeten Gesamtstruktur reduziert werden. Dies ermöglicht wiederum eine Erhöhung der Taktzeiten.

Grund hierfür ist die Tatsache, dass während des Herstellvorgangs und nach dem Herstellvorgang zum Auswerfen der fertigen Werkstücke das Formwerkzeug und das entsprechende Tragelement bewegt werden müssen. Je leichter die entsprechende Struktur ist, desto schneller und mit weniger Kraftaufwand kann diese Bewegung erfolgen. Darüber hinaus werden auch die Lager aufgrund des geringeren Gewichts weniger stark belastet, so dass entweder einfachere und preiswertere Lager zum Einsatz kommen können, oder es wird die Lebensdauer der Vorrichtung verlängert. Darüber hinaus kommt die Gesamtstruktur, welche aus Trennwerkzeug und Tragelement besteht, nach einer Bewegung aufgrund des geringeren Gewichts schneller zum Stillstand, was ebenfalls den Taktzeiten zugute kommt.

Aufgabe der vorliegenden Neuerung ist es, ein Thermoformwerkzeug der eingangs genannten Art so weiterzubilden, dass mit ihm das Trennen des Endprodukts von der Restfolie noch zuverlässiger möglich ist.

Diese Aufgabe wird bei einem Thermoformwerkzeug der eingangs genannten Art dadurch gelöst, dass das erste Trennwerkzeug gegenüber dem ersten Tragelement nicht starr gelagert bzw. befestigt ist, und/oder dass das zweite Trennwerkzeug gegenüber dem zweiten Tragelement nicht starr gelagert bzw. befestigt ist.

### Vorteile der Neuerung

Das neuerungsgemäße Thermoformwerkzeug ermöglicht eine gute und zuverlässige Trennwirkung des Trennwerkzeugs, da die exakte Relativpositionierung der zusammen wirkenden Trennkanten der Trennwerkzeuge gewährleistet werden kann. Dies wird durch die o.g. nicht starre Lagerung bzw. Befestigung erreicht. Unter dieser wird verstanden, dass sich ein Trennwerkzeug gegenüber seinem zugehörigen Tragelement wärmebedingt ausdehnen (bzw. schrumpfen) kann ohne sich gegenüber diesem zu verspannen, und somit ohne beispielsweise auszubauchen oder sich zu verziehen. Eine Realisierung einer solchen nicht starren Lagerung bzw. Befestigung kann beispielsweise in einer schwimmenden Lagerung bestehen.

Damit das fertige Endprodukt zuverlässig von der Restfolie getrennt werden kann, ist eine hohe Maßhaltigkeit der Relativpositionen der miteinander zusammenwirkenden Trennkanten der Trennwerkzeuge erforderlich. Neuerungsgemäß wurde festgestellt, dass trotz sorgfältiger werksseitiger Justierung diese Maßhaltigkeit nicht immer gewährleistet war. Es wurde herausgefunden, dass eine Ursache hierfür darin liegt, dass ein Thermoformwerkzeug beispielsweise am Einsatzort einer anderen Temperatur als am Herstellungsort ausgesetzt ist. Diese Temperaturdifferenz führt bei Strukturen, welche aus unterschiedlichen Materialien mit unterschiedliche Wärmeausdehnungskoeffizienten hergestellt sind, zu unterschiedlichen Wärmedehnungen.

Neuerungsgemäß wurde ferner festgestellt, dass diese unterschiedlichen Wärmedehnungen bei der bisher üblichen starren Fixierung des Trennwerkzeugs am Tragelement zu einer ungleichmäßigen Verformung des Trennwerkzeugs, beispielsweise zu einem Ausbauchen oder einem Verziehen, führen kann, was zu einer Verschiebung der Relativpositionen der Trennkanten führt. Gegebenenfalls ist sogar eine bleibende Verspannung des Trennwerkzeugs gegenüber dem Tragelement möglich, so dass sich die ursprünglichen Relativpositionen der Trennkanten selbst nach einem entsprechenden Temperaturausgleich nicht wieder ergeben.

All dies wird durch die neuerungsgemäß vorgesehene nicht-starre Lagerung bzw. Befestigung verhindert. Bei dieser kann sich das Trennwerkzeug gegenüber dem Tragelement temperaturbedingt ungehindert ausdehnen. Eine ungleichmäßige Verformung ist somit ausgeschlossen. Wenn beide Trennwerkzeuge gegenüber ihren Tragelementen nicht-starr gelagert bzw. befestigt sind, wird bei einer temperaturbedingten Dehnung (gleiche Temperaturen der beiden Trennwerkzeuge vorausgesetzt) zwar eine Änderung der Absolutpositionen der Trennkanten, jedoch keine oder wenigstens keine wesentliche Änderung der Relativpositionen der Trennkanten erfolgen.

Ist nur eines der beiden Trennwerkzeuge gegenüber dem entsprechenden Tragelement nicht-starr gelagert bzw. befestigt, kann es sich ebenfalls ungehindert ausdehnen und nach einem entsprechenden Temperaturausgleich auch wieder ungehindert in die am Herstellungsort bei den Herstellungsbedingungen exakt eingestellte Lage zurückkehren. Eine bleibende Verspannung und eine hierdurch verursachte irreversible Verformung des Trennwerkzeugs wird durch die nicht-starre Lagerung zuverlässig verhindert. Die Trennkante am Trennwerkzeug liegt in diesem Falle also - bei einer entsprechenden "Normtemperatur" - aufgrund der nicht-starren Lagerung bzw. Befestigung auch beim Einsatz unterschiedlicher Materialien immer an der werksseitig vorgesehenen optimalen Absolutposition.

Vorteilhafte Weiterbildungen der Neuerung sind in Unteransprüchen angegeben.

In einer ersten Weiterbildung wird vorgeschlagen, dass die nicht-starre Lagerung bzw. Befestigung eine Mehrzahl von Biegeelementen umfasst, welche das erste und/oder das zweite Trennwerkzeug mit dem ersten bzw. zweiten Tragelement verbinden und welche so ausgelegt sind, dass sie bei einer bestimmten maximalen temperaturbedingten Relativbewegung zwischen erstem Trennwerkzeug und erstem Tragelement bzw. zweitem Trennwerkzeug und zweitem Tragelement verformt werden. Derartige Biegelemente ermöglichen eine sehr exakte Positionierung des Trennwerkzeugs am Tragelement und gestatten dennoch die neuerungsgemäß vorgesehene verspannungsfreie Relativbewegung des Trennwerkzeugs gegenüber dem Tragelement. Eine zusätzliche Selbstzentrierung ist dann vorhanden, wenn die Biegeelemente so ausgelegt sind, dass sie sich nur elastisch verformen.

In konkreter Ausgestaltung hierzu wird vorgeschlagen, dass mindestens eines der Biegelemente eine Schraube und einen Gewindeabschnitt umfasst, welcher einen Biegeabschnitt aufweist, in den die Schraube eingeschraubt ist. Ein derartiges Biegeelement kann preiswert hergestellt werden.

Vorteilhaft ist es auch, wenn die nicht-starre Lagerung bzw. Befestigung eine Fixiereinrichtung umfasst, durch die das erste Trennwerkzeug an dem ersten Tragelement und/oder das zweite Trennwerkzeug an dem zweiten Tragelement mindestens translatorisch und in etwa punkförmig starr fixiert ist. Eine derartige Fixiereinrichtung sorgt für eine Stelle am Trennwerkzeug und am Tragelement, deren Relativposition unverändert bleibt. Eine derartige Stelle ermöglicht eine sehr genaue und reproduzierbare Justierung des Trennwerkzeugs gegenüber dem Tragelement.

Besonders preiswert baut das neuerungsgemäße Thermoformwerkzeug, wenn die Fixiereinrichtung einen Fixierbolzen umfasst. Darüber hinaus kann ein solcher Bolzen sehr exakt gefertigt und in entsprechend exakt dimensionierte Bohrungen in dem Tragelement bzw. in dem Trennwerkzeug eingebracht werden. Alternativ hierzu ist es auch möglich, dass die Fixiereinrichtung eine punktförmige Verschweißung (oder eine sonstige einstückige Verbindung) zwischen dem Trennwerkzeug und dem Tragelement umfasst.

In vorteilhafter Ausgestaltung des neuerungsgemäßen Thermoformwerkzeugs wird auch vorgeschlagen, dass die nicht-starre Lagerung bzw. Befestigung mindestens eine Führungseinrichtung umfasst, durch die das erste Trennwerkzeug gegenüber dem ersten Tragelement und/oder das zweite Trennwerkzeug gegenüber dem zweiten Tragelement translatorisch längs einer Führungsachse beweglich geführt ist. Auch durch eine solche Führungseinrichtung wird eine exakte und verspannungsfreie Positionierung des Trennwerkzeugs gegenüber dem Tragelement ermöglicht.

Besonders einfach ist eine solche Führungseinrichtung herzustellen, wenn sie eine Nut umfasst, in die ein entsprechendes Führungselement eingreift.

Eine exakte Positionierung des Trennwerkzeugs gegenüber dem Tragelement, ggf. sogar ohne Fixiereinrichtung, ist dann möglich, wenn zwei Führungseinrichtungen vorgesehen sind, deren Führungsachsen zueinander in einem rechten Winkel stehen. Vor allem in diesem Fall kann beispielsweise Unterdruck und/oder eine magnetische Kraft dazu verwendet werden, dass das Trennwerkzeug an seinem Tragelement "haftet".

Wenn dabei eine Fixiereinrichtung vorgesehen ist, muss diese auf der Führungsachse der Führungseinrichtung bzw. auf den Führungsachsen der Führungseinrichtungen liegen. Durch die Führungseinrichtung(en) wird die Winkellage des Trennwerkzeugs gegenüber dem Tragelement festgelegt, wohingegen die Fixiereinrichtung die translatorische Position des Trennwerkzeugs gegenüber dem Tragelement festlegt.

Vorgeschlagen wird ferner, dass zwischen einem Trennwerkzeug und dem zugehörigen Tragelement mindestens eine reibungsarme Gleitschicht vorhanden ist. Diese erleichtert die verspannunsgfreie Bewegung des Trennwerkzeugs.

In Weiterbildung hierzu wird vorgeschlagen, dass zwischen einem Trennwerkzeug und dem zugehörigen Tragelement mindestens ein Trägermaterial vorhanden ist, welches beidseitig eine reibungsarme Gleitschicht trägt. Diese Konstruktion ist stabil und erleichtert Fertigung und Wartung.

Bevorzugt wird insbesondere dann, wenn zwei Führungseinrichtungen und keine Fixiereinrichtung vorgesehen sind , dass mindestens ein Trennwerkzeug gegen das zugehörige Tragelement durch Unterdruck oder eine magnetische Kraft beaufschlagt wird. Hierdurch wird die Montage und Demontage des Trennwerkzeugs erleichtert.

### Zeichnung

Nachfolgend werden besonders bevorzugte Ausführungsbeispiele der vorliegenden Neuerung unter Bezugnahme auf die beiliegende Zeichnung im Detail erläutert. In der Zeichnung zeigen:
- Figur 1: einen teilweisen Schnitt durch ein erstes Ausführungsbeispiel eines Thermoformwerkzeug mit einem Oberteil und einem Unterteil;
- Figur 2: eine Detaildarstellung II des Thermoformwerkzeugs von Figur 1;
- Figur 3: eine schematische perspektivische Darstellung eines Tragelements und eines Trennwerkzeugs des Unterteils des Thermoformwerkzeugs von Figur 1;
- Figur 4: einen schematischen Teilschnitt längs der Ebene IV-IV in Figur 3;
- Figur 5: eine vergrößerte Darstellung eines Bereichs von Figur 4;
- Figur 6: eine teilweise geschnittene Darstellung eines Bereichs eines zweiten Ausführungsbeispiels eines Thermoformwerkzeugs;
- Figur 7: eine Detaildarstellung VII des Thermowerkzeugs von Figur 6;
- Figur 8: eine Darstellung ähnlich Figur 4 eines dritten Ausführungsbeispiels eines Thermoformwerkzeugs; und
- Figur 9: eine Darstellung ähnlich Figur 8 eines vierten Ausführungsbeispiels eines Thermoformwerkzeugs.

### Beschreibung der bevorzugten Ausführungsbeispiele

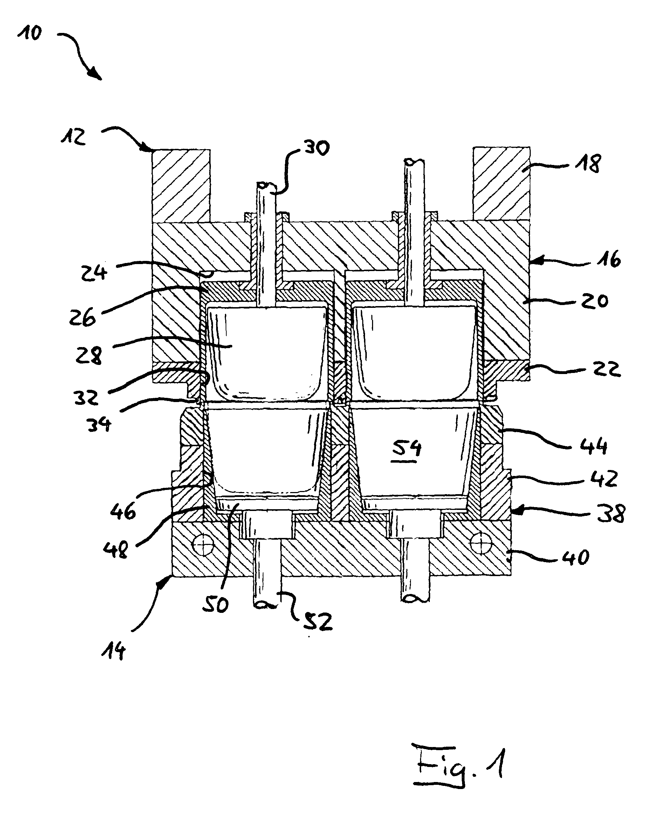

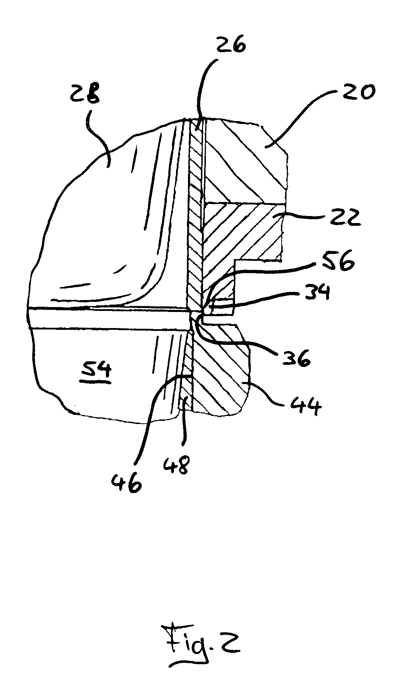

Ein Thermowerkzeug trägt in Figur 1 insgesamt das Bezugszeichen 10. Es umfasst ein Oberteil 12 und ein Unterteil 14, die von einer in der Figur nicht dargestellten Einrichtung aufeinander zu und voneinander weg bewegt werden können. Das Oberteil 12 umfasst ein oberes Tragelement 16, welches insgesamt aus Leichtmetall, bei dem vorliegenden Ausführungsbeispiel beispielsweise aus Aluminium, hergestellt ist. Teil des oberen Tragelements 16 sind wiederum eine obere Stützstruktur 18 und ein oberer Kühlblock 20. Am oberen Kühlblock 20 des oberen Tragelements 16 ist eine obere Stanzplatte 22 befestigt, welche aus Stahl hergestellt ist.

Der obere Kühlblock 20 wird von in Figur 1 nicht sichtbaren Kühlmittelkanälen durchsetzt. In ihm sind ferner mehrere sacklochartige Ausnehmungen 24 vorhanden, in denen jeweils ein topfförmiger Einsatz 26 vorhanden ist, welcher im Betrieb der Vorrichtung 10 eine Niederhaltefunktion aufweist. In der in Figur 1 dargestellten Ruhestellung des Thermoformwerkzeugs 10 ist in jedem topfförmigen Einsatz 26 ein zylindrischer und an seinem dem Unterteil 14 zugewandten Ende abgerundeter Vorstrecker 28 untergebracht. Der Vorstrecker 28 ist an einer Schubstange 30 befestigt, die über eine in Figur 1 nicht dargestellte Vorrichtung in Längsrichtung bewegt werden kann.

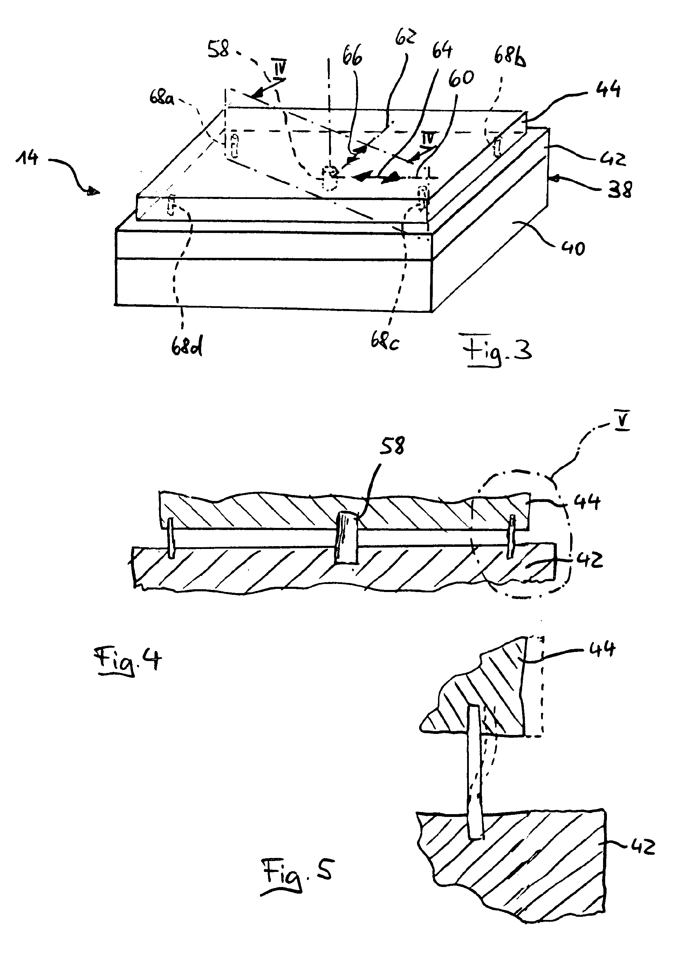

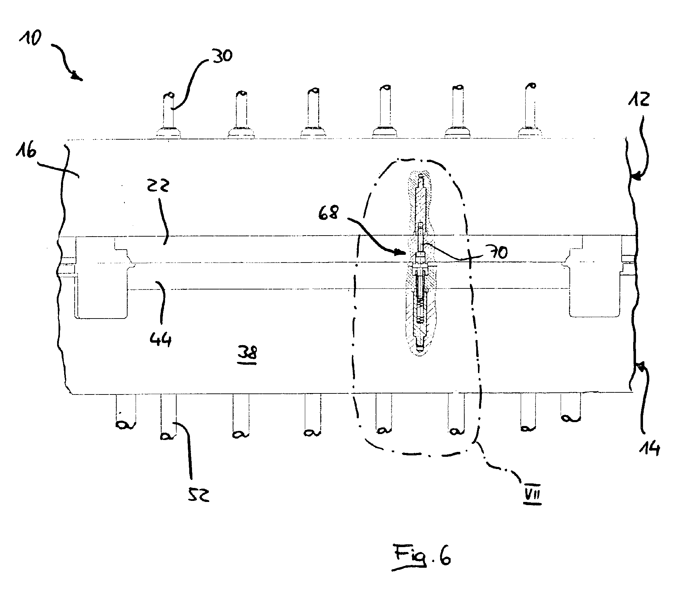

Die obere Stanzplatte 22 weist kreisrunde Öffnungen 32 auf, die mit der Außenkontur der topfförmigen Einsätze fluchten und die jeweils von einem ringförmigen Kragen 34 umgeben sind (vgl. auch Figur 2). Die radial inneren freien Ränder der ringförmigen Kragen 34 sind jeweils als obere Trennkante 36 ausgebildet. Die obere Trennkante 36 steht in axialer Richtung etwas über den freien Rand des topfförmigen Einsatzes 26 über.

Das Unterteil 14 des Thermoformwerkzeugs 10 ist ähnlich wie das Oberteil 12 aufgebaut. Es umfasst ein unteres Tragelement 38 vorliegend ebenfalls aus Aluminium (wobei grundsätzlich auch andere geeignete Leichtmetalle verwendet werden können), welches wiederum eine untere Stützstruktur 40 und einen unteren Kühlblock 42 umfasst. Auch hier wird der untere Kühlblock 42 von in der Figur nicht sichtbaren Kühlmittelkanälen durchsetzt. An der Oberseite des unteren Kühlblocks 42 ist eine untere Stanzplatte 44 aus Stahl befestigt.

Im unteren Kühlblock 42 und in der unteren Stanzplatte 44 sind jeweils miteinander in etwa fluchtende Ausnehmungen 46 vorhanden, in die jeweils ein Formeinsatz 48 eingesetzt ist (letztlich werden die Formeinsätze 48 jedoch durch die entsprechenden Ausnehmungen 46 in der unteren Stanzplatte 44 zentriert). In dem in Figur 1 dargestellten Ruhezustand des Thermoformwerkzeugs 10 ist im Bereich des Bodens eines Formeinsatzes 48 eine Auswurfplatte 50 vorhanden, die an einer Schubstange 52 befestigt ist, welche in ihrer Längsrichtung von einer geeigneten und in der Figur nicht dargestellten Vorrichtung bewegt werden kann.

Durch den Formeinsatz 48 wird eine Formöffnung 54 begrenzt, welche in etwa der Außenkontur eines herzustellenden Werkstücks entspricht. Die untere Stanzplatte 44 weist auf ihrer der oberen Stanzplatte 22 zugewandten Seite um den Rand der Formöffnungen 54 bzw. der Formeinsätze 48 umlaufende untere Trennkanten 56 auf. Diese arbeiten, wie weiter unten noch stärker im Detail dargestellt werden wird, mit den oberen Trennkanten 36 an der oberen Stanzplatte 22 zusammen.

Das in den Figuren 1 und 2 dargestellte Thermoformwerkzeug 10 dient zur Herstellung von Kunststoffbechern aus einer thermoplastisch verformbaren Kunststofffolie. Es wird folgendermaßen betrieben:

Zunächst ist zwischen dem Oberteil 12 und dem Unterteil 14 ein Zwischenraum vorhanden. Durch diesen wird eine Folie aus einem thermoplastisch verformbaren Kunststoffmaterial hindurchgeführt, welche auf ungefähr 100°C vorgewärmt ist (grundsätzlich können jedoch Folien verwendet werden, die eine Verarbeitungstemperatur von 10 bis 150°C aufweisen) . Die Folie ist in der Zeichnung nicht dargestellt. Bei stillstehender Folie werden die Vorstrecker 28 aus dem Oberteil 12 heraus und in die ihnen gegenüberliegenden Formöffnungen 54 im Unterteil 14 hineinbewegt (in Figur 1 strichpunktiert dargestellt). Hierdurch wird die Kunststofffolie in die Formöffnungen 54 hineingedrückt und kommt bereits zum Teil in Anlage an die Innenwand der entsprechenden Formeinsätze 48.

Über in den Figuren 1 und 2 nicht dargestellte Druckluftkanäle wird die Kunststofffolie zusätzlich mit Druckluft beaufschlagt und hierdurch vollständig in Anlage an die Innenwand eines Formeinsatzes 48 gebracht. Aufgrund der Kühlung des Formeinsatzes 48 mittels des Kühlblocks 42 erstarrt die an der Innenwand eines Formeinsatzes 48 anliegende Kunststofffolie. Nun wird der Vorstrecker 28 wieder in die in Figur 1 dargestellte Ruheposition zurückbewegt.

Um den fertigen Becher von der Restfolie zu trennen, wird das Oberteil 12 auf das Unterteil 14 zubewegt. Dabei wirken die oberen Trennkanten 36 an der oberen Stanzplatte 22 mit den unteren Trennkanten 56 an der unteren Stanzplatte 44 zusammen und trennen die in den Formöffnungen 54 vorhandenen fertigen Kunststoffbecher von der Restfolie. Je nach der Gestaltung der Trennkanten 36 und 56 kann es sich dabei um einen Stanz- oder um einen Schneidvorgang handeln.

Das Oberteil 12 wird nun wieder vom Unterteil 14 weggefahren, so dass die Trennkanten 36 und 56 wieder voneinander freikommen. Dann wird das Unterteil 14 um eine im Wesentlichen horizontale Achse (nicht dargestellt) verschwenkt, und die fertigen Kunststoffbecher werden von den entsprechenden Auswurfplatten 50 aus den Formöffnungen 54 in einen Sammel- oder Stapelbehälter ausgestoßen.

Damit die Trennung der fertigen Kunststoffbecher von der Restfolie schnell und ohne Beschädigung eines fertigen Kunststoffbechers erfolgen kann, müssen die Trennkanten 36 und 56 sehr genau relativ zueinander positioniert sein. Der Spalt zwischen den beiden Trennkanten 36 und 56 muss dabei sehr gleichmäßig sein und sollte üblicherweise im Bereich von 10 µm liegen. Insbesondere bei einer Kunststofffolie aus Polypropylen, welche eine vergleichsweise nur geringe Sprödigkeit aufweist, kann sonst eine saubere Trennung des fertigen Kunststoffbechers von der Restfolie nicht gewährleistet werden.

Aus diesem Grund erfolgt werksseitig eine sehr genaue Positionierung der oberen Stanzplatte 22 auf dem oberen Tragelement 16 und der unteren Stanzplatte 44 auf dem unteren Tragelement 38 und auch eine sehr genaue Positionierung der Tragelemente 16 und 38 relativ zueinander. Diese hochgenaue Relativpositionierung darf weder durch den Transport noch den Betrieb des Thermoformwerkzeugs 10 beeinträchtigt werden.

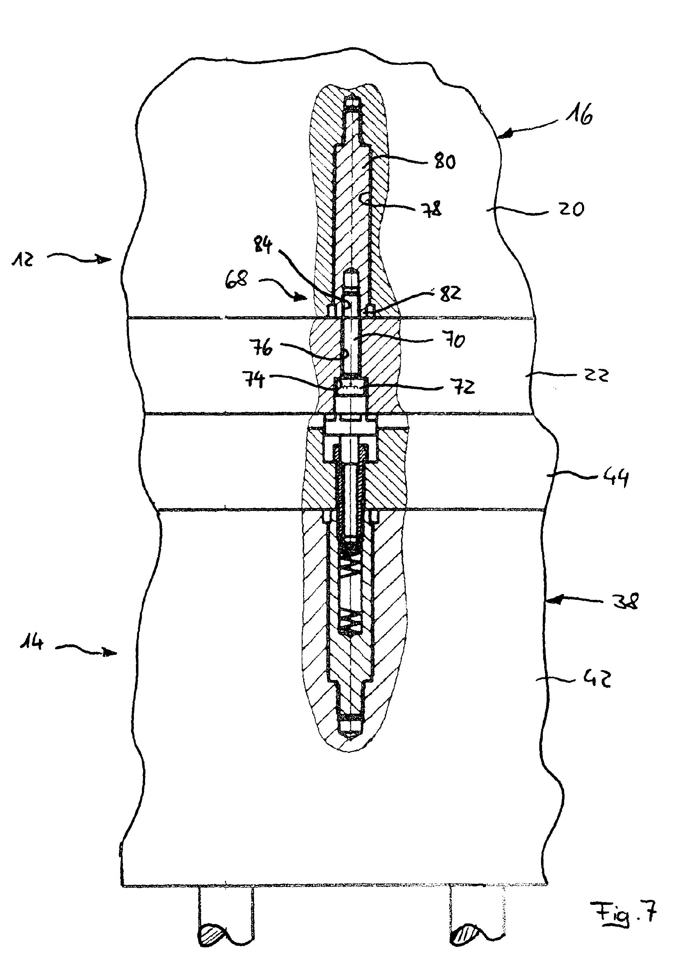

Um dies zu gewährleisten, muss berücksichtigt werden, dass die auch beim vorliegenden Ausführungsbeispiel aus Aluminium gefertigten Tragelemente 16 und 38 ein anderes Wärmeausdehnungsverhalten zeigen als die aus Stahl hergestellten Stanzplatten 22 und 44. Damit sich die Stanzplatten 22 und 44 gegenüber den jeweiligen Tragelementen 16 und 38 nicht verspannen (beispielsweise ausbauchen oder verziehen), wenn das Thermoformwerkzeug 10 einer anderen Temperatur ausgesetzt ist als während der werksseitigen Justierung, sind die Stanzplatten 22 und 44 gegenüber den jeweiligen Tragelementen 16 und 38 nicht-starr gelagert. Hierunter wird verstanden, dass sich eine Stanzplatte 22 bzw. 44 gegenüber ihrem zugehörigen Tragelement 16 bzw. 38 wärmebedingt ungehindert ausdehnen (bzw. schrumpfen) kann, und dass sie bei einer Rückkehr auf die Ausgangstemperatur wieder ungehindert in ihre ursprüngliche Ausgangslage zurückkehren kann. Verschiedene Möglichkeiten einer derartigen nicht-starren Lagerung sind in den Figuren 3 bis 8 beispielhaft dargestellt.

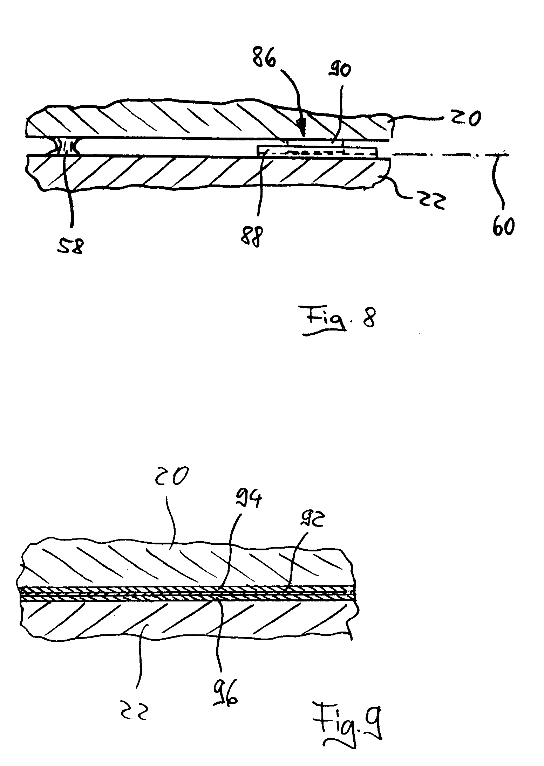

In Figur 3 ist das Unterteil 14 des Formwerkzeugs 10 nur schematisch dargestellt. Man erkennt das untere Tragelement 38, welches die untere Stützstruktur 40 und den unteren Kühlblock 42 umfasst, und man erkennt die an dem unteren Kühlblock 42 nicht-starr gelagerte untere Stanzplatte 44. Bei dem in Figur 3 dargestellten Ausführungsbeispiel umfasst die nicht-starre Lagerung eine Fixiereinrichtung, welche durch einen zentralen Fixierbolzen 58 realisiert ist (vgl. Figur 4). Durch diesen zentralen Fixierbolzen 58 ist die untere Stanzplatte 44 gegenüber dem unteren Kühlblock 42 translatorisch und in etwa punkförmig starr festgelegt. Ausgehend von diesem zentralen Fixierbolzen 58 kann sich die untere Stanzplatte 44 jedoch gegenüber dem unteren Kühlblock 42 längs zweier Achsen 60 und 62 ungehindert ausdehnen, welche in einem rechten Winkel zueinander stehen und durch den zentralen Fixierbolzen 58 hindurchgehen. Die entsprechenden Bewegungsmöglichkeiten sind in Figur 3 durch die Pfeile 64 und 66 angedeutet.

Wie aus den Figuren 4 und 5 ersichtlich ist, umfasst die in Figur 3 dargestellte nicht-starre Lagerung eine Mehrzahl von stiftförmigen Biegeelementen 68a bis 68d. Diese verbinden die untere Stanzplatte 44 mit dem unteren Kühlblock 42. Sie sind so steif, dass für eine hochpräzise Positionierung der unteren Stanzplatte 44 gegenüber dem unteren Kühlblock 42 gesorgt ist. Gleichzeitig sind sie jedoch auch so ausgelegt, dass sie bei einer bestimmten maximalen temperaturbedingten Relativbewegung zwischen der unteren Stanzplatte 44 und dem unteren Kühlblock 42 des unteren Tragelements 38 sich nur elastisch und nicht plastisch verformen. Ein entsprechend verformter Zustand ist in Figur 5 gestrichelt dargestellt.

Durch die in den Figuren 3 bis 5 dargestellte nicht-starre Lagerung der unteren Stanzplatte 44 am unteren Kühlblock 42 des unteren Tragelements 38 kann sich die untere Stanzplatte 44 bei einer durch eine Temperaturänderung hervorgerufenen Relativbewegung gegenüber dem Kühlblock 42 des unteren Tragelements 38 nicht verspannen. Darüber hinaus geht auch die Relativbewegung zwischen der unteren Stanzplatte 44 und dem unteren Kühlblock 42 wieder in etwa auf Null zurück und es stellen sich wieder die werksseitig eingestellten geometrischen Verhältnisse ein, sobald das Unterteil 14 des Thermoformwerkzeugs 10 wieder auf die werksseitig vorgegebene "Normtemperatur" zurückgeführt wird.

Es versteht sich, dass die in den Figuren 3 bis 5 nur für eine Stanzplatte dargestellte nicht-starre Lagerung in analoger Weise auch für die andere Stanzplatte vorgesehen werden kann. Dies gilt in entsprechender Weise auch für die nachfolgend beschriebenen Ausführungsbeispiele. Es versteht sich ferner, dass eine nicht-starre Lagerung auch nur unter Verwendung nur der Biegelemente 68, ohne den Fixierbolzen 58, möglich wäre.

In den Figuren 6 und 7 ist eine alternative und besonders bevorzugte Ausführungsform eines Biegeelements 68 dargestellt, mit dem die obere Stanzplatte 22 am oberen Kühlblock 20 des oberen Tragelements 16 befestigt ist. Dabei tragen solche Elemente und Bereiche in den Figuren 6 und 7, welche äquivalente Funktionen zu Elementen und Bereichen des in den Figuren 1 bis 5 dargestellten Ausführungsbeispiels aufweisen, die gleichen Bezugszeichen. Sie sind nicht nochmals im Detail erläutert.

Die Befestigung der oberen Stanzplatte 22 am Kühlblock 20 erfolgt bei dem in den Figuren 6 und 7 dargestellten Thermoformwerkzeug 10 mittels einer Mehrzahl von Schrauben 70, deren Kopf 72 sich an einem Absatz 74 einer stufenförmigen Durchgangsbohrung 76 in der oberen Stanzplatte 22 abstützt (siehe Figur 7). In eine Sack-Gewindebohrung 78 im Kühlblock 20 ist ein Gewindeeinsatz 80 eingeschraubt. Dessen der Stanzplatte 22 zugewandter Endbereich ist von der Wand der Sack-Gewindebohrung 78 beabstandet und bildet einen kragenförmigen Biegeabschnitt 82.

Im Gewindeeinsatz 80 ist eine vergleichsweise kurze Gewindebohrung 84 vorhanden, in die die Schraube 70 eingeschraubt ist. Im Wesentlichen befindet sich die Gewindebohrung 84 und die Verbindung zwischen der Schraube 70 und dem Gewindeeinsatz 80 im Bereich des Biegeabschnitts 82. Wenn es nun bei einer Temperaturänderung aufgrund der unterschiedlichen Wärmeausdehnungskoeffizienten zu einer Relativbewegung zwischen der Stanzplatte 22 und dem Kühlblock 20 kommt, kann sich der Biegeabschnitt 82 des Gewindeeinsatzes 80 und mit ihm die Schraube 70 elastisch verbiegen, so dass hierdurch eine Verformung der Stanzplatte 22 verhindert wird.

In Figur 8 ist eine nochmals andere Ausführung einer nicht-starren Lagerung zwischen der oberen Stanzplatte 22 und dem oberen Kühlblock 20 dargestellt. Auch hierbei gilt, dass solche Elemente und Bereiche, welche äquivalente Funktionen zu Elementen und Bereichen der in den Figuren 1 bis 7 dargestellten Ausführungsbeispiele aufweisen, die gleichen Bezugszeichen tragen und nicht nochmals im Detail erläutert sind.

Bei dem in Figur 8 dargestellten Ausführungsbeispiel eines Thermoformwerkzeugs 10 ist die obere Stanzplatte 22 gegenüber dem oberen Kühlblock 20 punktförmig durch eine Punktschweißung 58 fixiert. Zusätzlich ist jedoch eine Führungseinrichtung 86 vorhanden, durch welche die obere Stanzplatte 22 gegenüber dem oberen Kühlblock 20 translatorisch längs einer in Zeichnungsebene liegenden Führungsachse 60 (vergleiche Figur 3) translatorisch und beweglich geführt ist. Die Führungseinrichtung 86 umfasst dabei einen an der oberen Stanzplatte 22 befestigten Nutstein 88, in den ein entsprechend komplementäres Führungselement 90 eingreift, welches am Kühlblock 20 befestigt ist. In einer Achse senkrecht zur Zeichnungsebene von Figur 8 ist eine weitere Führungseinrichtung vorhanden, welche eine Bewegung der Stanzplatte 22 längs einer Führungsachse 62 (vergleiche Figur 3) ermöglicht. Die Führungsachsen 60 und 62 stehen somit in einem rechten Winkel zueinander und gehen durch den Schweißpunkt 58 hindurch.

Wenn eine Führungseinrichtung wie bei dem in Figur 8 dargestellten Ausführungsbeispiel verwendet wird, welche zwei zueinander orthogonale Führungsachsen aufweist, kann gegebenenfalls auch auf eine starre Fixiereinrichtung verzichtet werden. Dann kann die Haftung zwischen den beiden Elementen beispielsweise auch durch Unterdruck und/oder eine Magnetkraft bewirkt werden.

In Figur 9 ist eine nochmals andere Ausführung einer nicht-starren Lagerung zwischen der oberen Stanzplatte 22 und dem oberen Kühlblock 20 dargestellt. Auch hierbei gilt, dass solche Elemente und Bereiche, welche äquivalente Funktionen zu Elementen und Bereichen der in den Figuren 1 bis 8 dargestellten Ausführungsbeispiele aufweisen, die gleichen Bezugszeichen tragen und nicht nochmals im Detail erläutert sind.

In Figur 9 ist zwischen der Stanzplatte 22 und dem oberen Kühlblock 20 ein dünnes Trägermaterial 92 (beispielsweise ein dünnes Blech) angeordnet, welches beidseitig mit einer reibungsarmen Gleitbeschichtung 94 bzw. 96, beispielsweise aus Teflon, versehen ist. Hierdurch wird ein sehr reibungsarmes Gleiten zwischen der Stanzplatte 22 und dem oberen Kühlblock 20 ermöglicht, bei gleichzeitig geringem Abstand zwischen den beiden Elementen. Wie schon bei den obigen Ausführungsbeispielen kann die Lehre der Figur 9 natürlich auch auf die Verhältnisse am Unterteil 14 des Thermoformwerkzeugs 10 angewandt werden.

## Patentansprüche

1. Thermoformwerkzeug (10), mit einem Formwerkzeug (12), in dem mindestens eine Formöffnung (54) vorhanden ist, mit Mitteln (28), mit denen ein plastisch verformbares Flächenmaterial an der Innenwand der Formöffnung (54) in Anlage gebracht werden kann, mit einem ersten Trennwerkzeug (22), welches mit einem ersten Tragelement (16) verbunden ist und mindestens eine um den Rand der Formöffnung (54) umlaufende erste Trennkante (36) aufweist, und mit einem zweiten Trennwerkzeug (44), welches mit einem zweiten Tragelement (38) verbunden ist und mindestens eine zweite Trennkante (56) aufweist, die mit der ersten Trennkante (36) am ersten Trennwerkzeug (22) zusammenwirkt, wobei mindestens ein Trennwerkzeug (22, 44) aus einem anderen Material hergestellt ist als sein zugehöriges Tragelement (16, 38), **dadurch gekennzeichnet, dass** das erste Trennwerkzeug (22) gegenüber dem ersten Tragelement (16) nicht starr gelagert bzw. befestigt ist und/oder das zweite Trennwerkzeug (44) gegenüber dem zweiten Tragelement (38) nicht starr gelagert bzw. befestigt ist.

2. Thermoformwerkzeug (10) nach Anspruch 1, **dadurch gekennzeichnet, dass** die nicht-starre Lagerung bzw. Befestigung eine Mehrzahl von Biegelementen (68) umfasst, welche das erste und/oder das zweite Trennwerkzeug (22; 44) mit dem ersten bzw. zweiten Tragelement (16; 38) verbinden und welche so ausgelegt sind, dass sie bei einer bestimmten maximalen temperaturbedingten Relativbewegung zwischen erstem Trennwerkzeug (22) und erstem Tragelement (16) bzw. zweitem Trennwerkzeug (44) und zweitem Tragelement (38) verformt werden.

3. Thermoformwerkzeug (10) nach Anspruch 2, **dadurch gekennzeichnet, dass** mindestens eines der Biegeelemente (68) eine Schraube (70) und einen Gewindeabschnitt (80) umfasst, welcher einen Biegeabschnitt (82) aufweist, in den die Schraube (70) eingeschraubt ist.

4. Thermoformwerkzeug (10) nach einem der vorhergehenden Ansprüche, **dadurch gekennzeichnet, dass** die nicht-starre Lagerung bzw. Befestigung eine Fixiereinrichtung (58) umfasst, durch die das erste Trennwerkzeug (22) an dem ersten Tragelement (16) und/oder das zweite Trennwerkzeug (44) an dem zweiten Tragelement (38) mindestens translatorisch und in etwa punktförmig starr fixiert ist.

5. Thermoformwerkzeug (10) nach Anspruch 4, **dadurch gekennzeichnet, dass** die Fixiereinrichtung einen Fixierbolzen (58) umfasst.

6. Thermoformwerkzeug (10) nach Anspruch 4, **dadurch gekennzeichnet, dass** die Fixiereinrichtung eine punktförmige Verschweißung (58) umfasst.

7. Thermoformwerkzeug (10) nach einem der vorhergehenden Ansprüche, **dadurch gekennzeichnet, dass** die nicht-starre Lagerung bzw. Befestigung mindestens eine Führungseinrichtung (86) umfasst, durch die das erste Trennwerkzeug (22) gegenüber dem ersten Tragelement (16) und/oder das zweite Trennwerkzeug (44) gegenüber dem zweiten Tragelement (38) translatorisch längs einer Führungsachse (60, 62) beweglich geführt ist.

8. Thermoformwerkzeug (10) nach Anspruch 7, **dadurch gekennzeichnet, dass** die Führungseinrichtung (86) eine Nut (88) umfasst, in die ein entsprechendes Führungselement (90) eingreift.

9. Thermoformwerkzeug (10) nach einem der Ansprüche 7 oder 8, **dadurch gekennzeichnet, dass** zwei Führungseinrichtungen (86) vorgesehen sind, deren Führungsachsen (60, 62) zueinander in einem rechten Winkel stehen.

10. Thermoformwerkzeug (10) nach einem der Ansprüche 4 bis 6 in Verbindung mit einem der Ansprüche 7 bis 9, **dadurch gekennzeichnet, dass** die Führungsachse der Führungseinrichtung bzw. die Führungsachsen (60, 62) der Führungseinrichtungen (86) durch die Fixiereinrichtung (58) geht bzw. gehen.

11. Thermoformwerkzeug (10) nach einem der vorhergehenden Ansprüche, **dadurch gekennzeichnet, dass** zwischen einem Trennwerkzeug (22) und dem zugehörigen Tragelement (20) mindestens eine reibungsarme Gleitschicht (94, 96) vorhanden ist.

12. Thermoformwerkzeug (10) nach Anspruch 11, **dadurch gekennzeichnet, dass** zwischen einem Trennwerkzeug (22) und dem zugehörigen Tragelement (20) mindestens ein Trägermaterial (92) vorhanden ist, welches beidseitig eine reibungsarme Gleitschicht (94, 96) trägt.

13. Thermoformwerkzeug nach einem der vorhergehenden Ansprüche, **dadurch gekennzeichnet, dass** mindestens ein Trennwerkzeug gegen das zugehörige Tragelement durch Unterdruck oder eine magnetische Kraft beaufschlagt wird.
